# EUROPÄISCHE PATENTANMELDUNG

(11) **EP 3 490 089 A2**
(43) Veröffentlichungstag der Anmeldung: **29.05.2019**
(21) Anmeldenummer: 18203417.3
(22) Anmeldetag: 30.10.2018
(51) Int. Cl.: H02G 13/00, B64C 39/02, B64F 3/02

(54) **FLUGGERÄT, BLITZSCHUTZSYSTEM UND VERFAHREN ZUR BEREITSTELLUNG DES BLITZSCHUTZES**

(30) Priorität: 28.11.2017 DE 102017128075; 24.01.2018 DE 102018101556
(71) Anmelder: RIEDEL Communications International GmbH, 42109 Wuppertal (DE)
(72) Erfinder: Riedel, Thomas, 42109 Wuppertal (DE)
(74) Vertreter: Roche, von Westernhagen & Ehresmann

(57) **Zusammenfassung**

Die Erfindung betrifft unter anderem ein Fluggerät (10), umfassend wenigstens einen elektromotorischen Antrieb (24a, 24b) und eine Steuerung (33, 33a, 33b), wobei das Fluggerät unter Zuhilfenahme der Steuerung eine eingestellte Flugposition dauerhaft bewahren kann, wobei das in seiner Flugposition befindliche Fluggerät über eine Kabelanordnung (13) mit einer Bodenstation (11) verbunden ist, wobei die Kabelanordnung wenigstens zwei elektrische Leiter (27a, 27b, 27c, 27d, 27e, 27f, 27g) zur Bereitstellung einer Spannungsversorgung für den Antrieb umfasst, wobei das Fluggerät eine Blitzschutzeinrichtung (34a, 34b, 34c) aufweist, die die Steuerung und/oder den Antrieb und/oder andere elektronische Bauelemente des Fluggerätes vor Blitzeinschlägen schützt, wobei die Kabelanordnung einen Summenquerschnitt der elektrischen Leiter aufweist, der eine Weiterleitung von hohen, durch Blitzeinschläge verursachten elektrischen Strömen von dem Fluggerät (10) zur Bodenstation (11) ermöglicht, und wobei die Kabelanordnung im Bereich der Bodenstation mit einem Blitz-Übergabe-Punkt (16) im Erdreich (15) verbunden ist.

## Beschreibung

Die Erfindung betrifft zunächst ein Fluggerät nach Anspruch 1.

Fluggeräte der gattungsgemäßen Art sind bekannt, und zunehmend weit verbreitet. Die gattungsgemäßen Fluggeräte werden herkömmlich auch als Drohnen bezeichnet. Sie umfassen eine Tragestruktur oder einen Tragkörper, auf dem eine Batterie, oder allgemein ein Akku, angeordnet ist, der dem Antrieb wenigstens eines Elektromotors dient. In der Regel sind mehrere Antriebe, nämlich für jeden der Motoren ein Antrieb, vorgesehen. Derartige Drohnen oder Flugdrohnen werden auch als Multicopter bezeichnet. Abhängig von der Zahl der Motoren - und der Zahl der elektromotorischen Antriebe - spricht man beispielsweise von Quadrocoptern, die also vier Motoren aufweisen.

Derartige Flugdrohnen können - je nach Auslegung - auch eine deutlich höhere Zahl von Motoren aufweisen. Es sind beispielsweise Drohnen mit zwölf oder mehr Antrieben bekannt.

Das bekannte Fluggerät erhält seine Spannungsversorgung von einem in der Regel wieder aufladbaren, gegebenenfalls auch austauschbaren Akku. Die Flugdauer des Fluggerätes ist durch die Nennleistung des Akkus begrenzt. Das Fluggerät weist eine vorgegebene, maximale Traglast auf, so dass auch die Baugröße des Akkus Einschränkungen unterliegt.

Ausgehend von einem durch offenkundige Vorbenutzung bekannt gewordenen, druckschriftlich nicht belegbaren Fluggerät, besteht die Aufgabe der Erfindung darin, das Fluggerät derartig weiterzubilden, dass es in neuen Anwendungsbereichen einsetzbar ist.

Die Erfindung löst diese Aufgabe mit den Merkmalen des Anspruches 1.

Die Erfindung bezieht sich auf ein Fluggerät, das wenigstens einen elektromotorischen Antrieb aufweist. Vorzugsweise weist das erfindungsgemäße Fluggerät eine Mehrzahl elektromotorischer Antriebe, beispielsweise zwei oder drei Elektromotoren auf. Weiter vorzugsweise entspricht die Zahl der elektromotorischen Antriebe, also die Zahl der Elektromotoren, der Anzahl der vorhandenen Rotoren oder Propeller, so dass in der Regel jedem Rotor ein Elektromotor zugeordnet ist.

Das Fluggerät weist darüber hinaus eine Steuerung auf, mit der das Fluggerät eine eingestellte Flugposition dauerhaft bewahren kann. Die Steuerung ist eine vorzugsweise an dem Fluggerät unmittelbar angeordnete Elektronikeinheit, insbesondere umfassend wenigstens einen Prozessor, die unter Zuhilfenahme von geeigneter Sensorik, wie beispielsweise Lageveränderungssensoren, und/oder Beschleunigungssensoren, und/oder Positionssensoren, eine stabile oder weitestgehend stabile relative Ortsposition des Fluggerätes gewährleisten kann. Insbesondere ist die Steuerung in der Lage, die angestrebte Flugposition dauerhaft zu bewahren, ohne, dass dies ein fortwährendes oder regelmäßiges Eingreifen einer Bedienperson erfordert.

Hierzu kann auf herkömmliche Steuerungen und Steuerungsverfahren zurückgegriffen werden, die bei herkömmlichen Fluggeräten, insbesondere bei herkömmlichen Drohnen, bereits Anwendung finden, und an sich bekannt sind.

Das Fluggerät kann also, insbesondere durch eine benutzergeführte Steuerung, zu einen bestimmtem Ort hin gesteuert werden, z. B. eine bestimmte Position in einem bestimmten Abstand von einem festgelegten, auf dem Boden angebrachten Körper einnehmen, und kann die so gewählte Flugposition sodann automatisch dauerhaft beibehalten.

Das Fluggerät ist gemäß der Erfindung über eine Kabelanordnung mit einer Bodenstation verbindbar. Hierzu weist das Fluggerät vorteilhaft wenigstens einen Anschluss zur lösbaren Verbindung des Fluggerätes mit der Kabelanordnung auf. Die Kabelanordnung ist darüber hinaus mit einer Bodenstation verbindbar. Die Bodenstation ist fest am Boden angeordnet.

Die Kabelanordnung kann eine Länge von beispielsweise zwischen 5 und 500 Metern, vorzugsweise eine Länge zwischen 20 und 120 Metern, aufweisen. Das Fluggerät ist in eine Flugposition verbringbar, die eine maximale Höhe, also einen Abstand zum Boden aufweist, der der Länge der Kabelanordnung entspricht.

Gemäß der Erfindung ist des weiteren vorgesehen, dass die Kabelanordnung wenigstens zwei elektrische Leiter zur Bereitstellung einer Spannungsversorgung für den Antrieb umfasst.

Das Fluggerät erhält insoweit die Betriebsspannung, mit der die elektromotorischen Antriebe versorgt werden, unmittelbar von der Bodenstation über die Kabelanordnung. Das Fluggerät muss insoweit selbst gar nicht mehr über eigene mitzunehmende Batterie oder einen Akkumulator verfügen. Die Spannungsversorgung des Antriebs kann ausschließlich - oder zumindest teilweise oder temporär - über die Kabelanordnung erreicht werden. Insbesondere kann das Fluggerät durch Gewährleistung einer dauerhaften Spannungsversorgung eine praktisch beliebig lange Zeit, also z. B. auch mehrere Stunden oder Tage lang, in der eingestellten Flugposition verbleiben.

Angemerkt sei, dass das Fluggerät aufgrund der erfindungsgemäß bereitgestellten Möglichkeit einer deutlich verlängerten Bewahrung der eingestellten Flugposition gemäß einer vorteilhaften Ausgestaltung der Erfindung auch eine Möglichkeit zur Korrektur der tatsächlich bestehenden Flugposition relativ zur eingestellten Soll-Flugposition besitzt und eine solche Korrektur durchführen kann.

Während die Steuerung eines Fluggerätes herkömmlicher Art bereits über erstaunlich exakte und präzise Mechanismen verfügt, um selbst bei Wind, auch bei stärkeren Winden, eine eingestellte Flugposition zu bewahren, kann bei den erfindungsgemäß möglichen Dauereinsätzen von mehreren Stunden oder gar mehreren Tagen (bis zu Wochen) ggf. eine Korrektur der tatsächlich erreichten Flugposition im Hinblick auf die eingestellte Soll-Flugposition erforderlich werden. Hierzu kann das Fluggerät über besondere Positions-Korrekturmittel verfügen, die beispielsweise im Falle des Auftretens von Abweichungen außerhalb vorbestimmter Soll-Grenzen von der Soll-Flugposition für eine automatische Rückführung des Fluggerätes in die Soll-Flugposition sorgen. Hierzu können beispielsweise GPS-Positionier- oder Re-Positionierhilfen oder andere geeignete Positionsmess- und Positionskorrekturverfahren vorgesehen sein.

Gemäß der Erfindung weist das Fluggerät darüber hinaus eine Blitzschutzeinrichtung auf. Die Blitzschutzeinrichtung ist an dem Fluggerät angebracht und/oder dem Fluggerät zugeordnet. Die Blitzschutzeinrichtung dient zunächst dazu, dass Fluggerät vor einer dauerhaften Schädigung in Form eines Blitzeinschlages zu schützen. Insbesondere soll die Blitzschutzeinrichtung dazu dienen, die Steuerung des Fluggerätes und/oder den Antrieb oder die Antriebe des Fluggerätes vor Blitzeinschlägen zu schützen. Hierzu kann die Blitzschutzeinrichtung beispielsweise eine oder mehrere Einrichtungen nach Art eines Überspannungsschutzes aufweisen. Ein Überspannungsschutz kann beispielsweise dazu dienen, elektronische oder elektrische Bauteile oder Komponenten des Fluggerätes vor zu hohen Spannungen und/oder vor zu hohen Strömen zu schützen. Hierzu kann beispielsweise auch vorgesehen sein, dass die Blitzschutzeinrichtung eine oder mehrere Sicherungen umfasst.

Die Sicherungen können steuerbar oder schaltbar ausgebildet sein. Die Blitzschutzeinrichtung kann auch dadurch bereitgestellt sein, dass eines oder mehrere elektronische Bauelemente des Fluggerätes redundant vorhanden sind, sodass beispielsweise im Falle des Ausfalles eines elektronischen Bauelementes, zum Beispiel einer Steuerung des Fluggerätes, zeitnah nach Ausfall dieses elektronischen Bauelementes ein anderes Bauelement, also zum Beispiel ein zweites, redundant vorhandenes Steuergerät oder eine entsprechende Steuerung die Funktion des ausgefallenen elektronischen Bauelementes übernehmen kann.

Als Blitzschutzeinrichtung des Fluggerätes wird im Sinne der vorliegenden Patentanmeldung bei einem Ausführungsbeispiel der Erfindung auch eine Einrichtung verstanden, die gewährleistet, dass im Falle eines Blitzeinschlages in das Fluggerät das Fluggerät seine eingestellte Position bewahren oder nach einem sehr kurzzeitigen Ausfall schnell wieder einnehmen kann, insbesondere einnehmen kann, ohne, dass es eines Eingriffes einer Bedienperson bedarf.

Hierzu kann auf an sich bekannte herkömmliche Komponenten zur Erzielung eines Blitzschutzes für elektronische Bauelemente zurückgegriffen werden.

Gemäß der Erfindung ist darüber hinaus die Kabelanordnung derart ausgebildet, dass sie den eingeschlagenen Blitz sicher ins Erdreich leiten kann. Sie weist hierzu wenigstens zwei elektrische Leiter auf, deren Summenquerschnitt ausreichend groß bemessen ist, dass die Kabelanordnung eine Weiterleitung von hohen elektrischen Strömen, wie sie bei Blitzeinschlägen verursacht werden, von dem Fluggerät zur Bodenstation ermöglicht.

Der Mindest-Summenquerschnitt, den mehrere elektrische Leiter in Summe aufweisen müssen, um eine Blitz-Weiterleitung gewährleisten zu können, beträgt nach den derzeitigen Berechnungen der Anmelderin etwa wenigstens 10 mm². Es ist aber auch denkbar, je nach Positionierung und Anordnung und Wahl der Zahl der elektrischen Leiter der Kabelanordnung diesen Mindestquerschnitt unter Umständen auf noch geringere Summenquerschnitte von wenigstens 5 mm² zu reduzieren.

Angemerkt sei, dass nach geltender Blitzschutznorm sogar noch höhere Querschnitte, nämlich von mindestens 50 mm², Anwendung finden sollten. Aufgrund der von der Anmelderin vorgenommenen Berechnungen, Entwicklungen und Forschungsarbeiten sind bei dem erfindungsgemäßen Anmeldungsfall allerdings geringere erforderliche Summenquerschnitte von wenigstens 10 mm² als ausreichend anzusehen.

Gemäß der Erfindung weist die Kabelanordnung wenigstens zwei elektrische Leiter auf, über die die Bodenstation die Antriebe des Fluggerätes mit Betriebsspannung versorgt. Es genügt im Sinne der Erfindung, dass wenigstens einer der beiden Leiter mit einem großen Leiterquerschnitt ausgestattet ist, der eine Blitzweiterleitung zulässt. Von der Erfindung ist auch umfasst, wenn beide Leiter zusammen mit einem ausreichend großen Summenquerschnitt ausgestattet sind.

Von der Erfindung ist aber schließlich weiter umfasst, dass zusätzlich noch ein dritter Leiter vorgesehen ist, oder eine Mehrzahl weiterer Leiter vorgesehen ist, wobei der Summenquerschnitt sämtlicher Leiter das Mindestmaß von wenigstens 5 mm² oder insbesondere mehr als 10 mm² erreicht.

Die Kabelanordnung ist jedenfalls mit einem solchen Summenquerschnitt ausgestattet, dass elektrische Ströme, wie sie bei Blitzeinschlägen generiert werden, von dem Fluggerät zur Bodenstation und weiter ins Erdreich weitergeleitet werden können.

Gemäß der Erfindung ist des Weiteren vorgesehen, dass die Kabelanordnung im Bereich der Bodenstation mit einem Blitz-Übergabe-Punkt im Erdreich verbindbar oder verbunden ist. Der Blitz-Übergabe-Punkt kann auch von einem Blitzübergabebereich gebildet sein.

Gemäß der geltenden Blitzschutznorm ist es zur Erzielung oder Einhaltung bestimmter Blitzschutzklassen erforderlich, dass eine Übergabe der hohen, durch den Blitz verursachten Ströme und Spannungen unmittelbar an das Erdreich erfolgt. Hierdurch werden zum Beispiel Erdsonden in die Erde gebohrt. Vorteilhafterweise sind die Blitz-Übergabe-Punkte wenigstens in einer Tiefe von 3 Metern vorgesehen. Unter Umständen können auch etwas geringere Tiefen, gegebenenfalls nur 2 Meter Tiefe, in besonderen Fällen auch nur 1 Meter Tiefe, Anwendung finden. Entscheidend ist, dass die diejenigen elektrischen Leiter der Kabelanordnung, die zur Blitzweiterleitung beitragen, mittelbar oder unmittelbar, mit dem Erdreich in Verbindung stehen, sodass der Blitz in die Erde unmittelbar eingeleitet werden kann.

Gemäß der Erfindung ermöglicht das Fluggerät einen Schutz eines bestimmten Bereiches oder Geländes auf der Erde vor Blitzeinschlägen. So kann beispielsweise während einer Veranstaltung, wie einem Sportwettbewerb oder einer Musik-Veranstaltung, zum Beispiel eines Musik-Open-Airs, ein Schutz der Besucher, Künstler und Veranstaltungstechniker vor Blitzeinschlägen gewährleistet werden.

Hierzu wird das Fluggerät über die Kabelanordnung mit der Bodenstation verbunden und eine Flugposition des Fluggerätes in einer Höhe eingestellt, die größer ist als sämtliche Bodenunebenheiten oder Aufbauten oder Gebäude oder Erhebungen des Geländes. Bekanntlich schlägt ein Blitz an der höchsten Stelle im Gelände ein, sodass vorliegend der Blitz die Drohne erfassen wird. Von der Drohne, also dem Fluggerät, wird der Blitz dann unmittelbar ins Erdreich geleitet, und dies bis in eine ausreichende Tiefe, sodass die auf dem Musikkonzert anwesenden Personen den Blitzschlägen nicht ausgesetzt sind und der Ablauf der Veranstaltung nicht beeinträchtigt wird.

Von der Erfindung ist weiter umfasst, wenn mehrere Fluggeräte, vorteilhafterweise verbunden mit jeweils einer eigenen Bodenstation, nach Art eines Rasters oder Arrays unter einem vorgegebenen Maximalabstand von beispielsweise 40 oder 80 Metern Abstand voneinander nach Art von Gitternetzpunkten über der Veranstaltung fliegen oder schweben. Die Durchführung der Veranstaltung wird durch die Präsenz und Anwesenheit der Fluggeräte auch nicht beeinträchtigt, da von den Fluggeräten weder eine Lärmbelästigung noch irgendwelche Gefahren oder Risiken ausgehen.

Ganz im Gegenteil, können die Fluggeräte erfindungsgemäß auch dazu verwendet werden, eine drahtlose Kommunikation zu ermöglichen und beispielsweise ein Funknetzwerk zur Übermittlung von Daten oder Audio- und Videoinformationen mit verbesserten Eigenschaften, zum Beispiel verbesserten Sende- und Empfangsqualität, bereitzustellen.

Gemäß einer vorteilhaften Ausgestaltung der Erfindung weist der Blitz-Übergabe-Punkt eine Tiefe im Erdreich von wenigstens 1 Meter, insbesondere von wenigstens 2 Meter, weiter insbesondere von wenigstens 3 Meter, auf. Hierdurch besteht die Möglichkeit, bestehende Blitzschutzanforderungen nach den gesetzlichen Bestimmungen zu ermöglichen und eine sichere Einleitung des Blitzes in das Erdreich zu gewährleisten.

Gemäß einer weiteren vorteilhaften Ausgestaltung umfasst die Blitzschutzeinrichtung einen Überspannungsschutz und/oder eine redundante Ausbildung elektronischer Bauelemente des Fluggerätes, insbesondere eine redundante Ausbildung der Steuerung. Gemäß dieser Ausgestaltung der Erfindung kann insbesondere auch unter Rückgriff auf herkömmliche Überspannungsschutzeinrichtungen eine Beeinträchtigung der Funktion der elektronischen Bauelemente des Fluggerätes, insbesondere auch der Steuerung des Fluggerätes, sicher vermieden werden. Auch durch eine redundante Auslegung und Anordnung von elektronischen Bauelementen, insbesondere durch redundante Ausbildung der Steuerung, kann eine hohe Betriebssicherheit des Fluggerätes und dessen Ausfallsicherheit gewährleistet werden.

Gemäß einer weiteren vorteilhaften Ausgestaltung der Erfindung umfassen die elektrischen Leiter der Kabelanordnung auch Kupferleiter. Hierdurch kann auf herkömmliche Berechnungen für Mindestsummenquerschnitte, die im Falle eines Blitzeinschlages erforderlich sind, zurückgegriffen werden.

Gemäß einer weiteren vorteilhaften Ausgestaltung der Erfindung umfasst der Summenquerschnitt sämtlicher elektrischer Leiter der Kabelanordnung wenigstens 5 mm², insbesondere wenigstens 8 mm², weiter insbesondere wenigstens 10 mm², und weiter insbesondere wenigstens 12 mm². Hierdurch werden ausreichend hohe Summenquerschnitte bereitgestellt, die eine Weiterleitung von bei Blitzeinschlägen ausgelösten hohen Strömen ermöglichen und die sicher dafür sorgen, dass der Blitz ausschließlich über die Kabelanordnung von dem Fluggerät zur Bodenstation und ins Erdreich gelangt.

Gemäß einer weiteren vorteilhaften Ausgestaltung der Erfindung ist die Flugposition des Fluggerätes einstellbar. Hierdurch kann beispielsweise manuell, unter Zuhilfenahme von Fernsteuerungen, entweder über die Bodenstation, oder alternativ unmittelbar über ein Funkgerät drahtlos oder drahtgebunden eine Einstellung der Flugposition des Fluggerätes erfolgen.

Gemäß einer weiteren vorteilhaften Ausgestaltung der Erfindung weist die Kabelanordnung mehrere Leiter auf, die sämtlich zur Blitzschlag-Weiterleitung beitragen. Von der Erfindung ist aber auch eine Ausführungsform umfasst, bei der an der Kabelanordnung nur ein einziger elektrischer Leiter mit einem besonders großen Querschnitt vorgesehen ist, um die Blitz-Weiterleitung zu ermöglichen.

Von der Erfindung ist gemäß einer weiteren, vorteilhaften Ausführungsform der Erfindung aber auch umfasst, wenn die Kabelanordnung mehrere Leiter aufweist, die gemeinsam zur Blitzschlag-Weiterleitung beitragen. Durch Verteilung, der im Falle eines Blitzschlages ausgelösten hohen Ströme, auf mehrere Leiter, können die erforderlichen Summenquerschnitte gering gehalten werden, da physikalische Effekte auftreten, die sich zu Nutze gemacht werden können.

Gemäß einer weiteren vorteilhaften Ausgestaltung der Erfindung weist das Fluggerät eine Kommunikationseinheit auf, mit der eine drahtlose Kommunikation zu anderen Teilnehmern eines Funknetzwerkes bewerkstelligbar ist. Dadurch, dass das Fluggerät in einer besonders großen Höhe seine Flugposition einnimmt, weit oberhalb des vor Blitzeinschlägen zu schützenden Geländes, kann diese große Höhe auch vorteilhaft dazu verwendet werden, direkte Funk-Verbindungen zu anderen Teilnehmern zu bewerkstelligen.

Gemäß einer weiteren vorteilhaften Ausgestaltung der Erfindung umfasst die Kabelanordnung ein Glasfaserkabel, über welches Daten von der Bodenstation zur Kommunikationseinheit übermittelbar sind oder über welches Daten von der Kommunikationseinheit zur Bodenstation übermittelbar sind.

Die Kabelanordnung ist in diesem Fall nach Art eines hybriden Kabels ausgebildet. Die Kabelanordnung umfasst wenigstens eine Glasfaser, die die Übermittlung von Daten oder Signalen auf optische Weise ermöglicht. Hierzu können Daten und/oder Signale zwischen dem Fluggerät und der Bodenstation - unidirektional oder bidirektional - übertragen werden. Das Glasfaserkabel ermöglicht dabei sehr hohe Datenübertragungsraten, und insbesondere auch eine besonders einfache Möglichkeit, die Daten und/oder Signale sowohl am Fluggerät, als auch auf der Bodenstation in die Glasfaser einzukoppeln, bzw. wieder auszukoppeln.

Insbesondere kommt ein Datenübertragungsverfahren in Betracht, welches als Radio-over-Fiber (RoF) oder RF-over-Fiber (RFoF) fungiert. Mit dieser Technologie wird ein über die Glasfaser geleiteter Lichtstrom mit einem Radiofrequenzsignal moduliert.

Zugleich umfasst die Kabelanordnung aber wenigstens zwei elektrische Leiter zur Bereitstellung einer Spannungsversorgung des Antriebs. Über die wenigstens zwei elektrischen Leiter können die elektrischen Antriebe am Fluggerät entweder mit Gleichspannung oder mit Wechselspannung versorgt werden.

Die Kabelanordnung dieser Ausführungsform kann auf herkömmliche elektrische Leiter und herkömmliche Glasfaserkabel zurückgreifen, und diese zu einer erfindungsgemäßen Kabelanordnung miteinander kombinieren. Beispielsweise können zwei elektrische Leiter (oder auch mehrere elektrische Leiter) mit einer herkömmlichen Glasfaser verbunden, z. B. verklebt, verschweißt oder punktuell oder bereichs- oder stellenweise verbunden werden. Von der Erfindung sind aber auch Kabelanordnungen hybrider Art umfasst, bei denen beispielsweise ein Glasfaserkabel mit zwei elektrisch leitenden Mänteln umhüllt ist, die voneinander durch eine dazwischen liegende Zwischenschicht getrennt sind.

Die erfindungsgemäße hybride Kabelanordnung ist bei einer Länge von 100 Metern mit einem Gewicht in der Größenordnung von etwa 4-20 Kilogramm realisierbar. Eine herkömmliche Flugdrohne kann Traglasten bis beispielsweise 15-25 Kilogramm tragen. Nach Abzug der etwa 4 Kilogramm für die Hybridkabelanordnung verbleibt z. B. eine Resttraglast von beispielsweise 11 Kilogramm.

Dies ermöglicht eine Anordnung von Sende- und Empfangstechnik auf dem Fluggerät, einschließlich der Anordnung von elektrooptischen Wandlern oder optisch elektrischen Wandlern, die eine Signaleinkopplung in die Glasfaser bzw. eine Auskopplung vornehmen.

Die von dem Fluggerät zu installierende Technik kann auf Antennen, Filter, z. B. Duplexer, Sende- und Empfangsverstärker und Wandler beschränkt werden.

Die gegenüber der Sende- und/oder Empfangstechnik an dem Fluggerät weitaus komplexer aufgebaute, schwere Signalverarbeitungstechnik einschließlich der Sende- und Empfangstechnik und der Verstärker, kann an der Bodenstation angeordnet werden. Deren Anordnung auf der Flugdrohne ist unter Berücksichtigung der geringen Traglasten ohnehin nicht möglich.

Das erfindungsgemäße Fluggerät kann so als ein zentrales Element eines Funknetzes eingesetzt werden. Insbesondere kann das Fluggerät für temporär aufzubauende Funknetze, wie beispielsweise für die Berichterstattung bei großen Sportveranstaltungen, oder Events, eingesetzt werden. Hier kommt es häufig zu schlechter Funkqualität, beispielsweise aufgrund von Verschattungen. Im Stand der Technik war es hierzu üblich, Funkmasten aufzubauen oder Hubarbeitsbühnen vorzusehen, die in dem Hubwagen angeordnet die schwere Sende- und Empfangstechnik aufweisen, und aufgrund der erhabenen, d. h. weit über dem Boden angeordneten Position, eine gute Funkverbindung zu den einzelnen Teilnehmern ermöglichte. Erfindungsgemäß kann auf den Einsatz derartiger Hubwagen bei Einsatz des erfindungsgemäßen Fluggerätes verzichtet werden.

An dem Fluggerät ist erfindungsgemäß zumindest eine Antenne angeordnet. Die Antenne kann als Empfangsantenne fungieren, oder als Sendeantenne, oder als Sende- und Empfangsantenne.

Das erfindungsgemäße Fluggerät kann in einem Funknetzwerk eingesetzt werden, um mit einer Mehrzahl von Teilnehmern eine Funkverbindung aufzubauen. In einem ersten Betriebsmodus ist das Fluggerät dazu ausgebildet, von Teilnehmern gesendete Funksignale zu empfangen, über einen elektrooptischen Wandler in die Glasfaser einzukoppeln, und zur Bodenstation zu leiten. In der Bodenstation werden die Signale dann unter Zuhilfenahme eines optoelektronischen Wandlers - ggf. unter Zwischenschaltung eines Verstärkers - aus der Glasfaser entkoppelt, und weiter verarbeitet.

Gemäß einem weiteren alternativen Betriebsmodus ist das Fluggerät dazu ausgebildet, unter Zuhilfenahme einer am Fluggerät angeordneten Antenne Funksignale an Teilnehmer des Funknetzes zu senden. Hierzu werden von der Bodenstation unter Zuhilfenahme eines elektrooptischen Wandlers Signale in die Glasfaser eingekoppelt, und unter Zuhilfenahme einer optischelektronischen Wandlereinheit am Fluggerät die Signale ausgekoppelt, und sodann - ggf. nach Verstärkung - über die Antenne abgestrahlt.

Die beiden vorbeschriebenen Betriebsarten können jeweils in einem unidirektionalen Betrieb der Kabelanordnung erreicht werden.

Von der Erfindung ist aber auch umfasst, wenn im Rahmen eines bidirektionalen Betriebes sowohl ein Empfangs- als auch ein Sendebetrieb erfolgt. In diesem Falle kann das Fluggerät nach Art eines optischen Repeaters eingesetzt werden, und die von den Teilnehmern des Funknetzes empfangenen Signale zum Zwecke der Verstärkung an die Bodenstation übermitteln, und nach Erhalt verstärkter Signale von der Bodenstation diese als Funksignale wieder emittieren. Hierdurch wird die Funknetzqualität und die Reichweite des Funknetzes erheblich verbessert.

Von der Erfindung ist auch umfasst, wenn an dem Fluggerät eine oder mehrere Antennen angeordnet sind.

Von der Erfindung ist weiter umfasst, wenn die Kabelanordnung ein oder mehrere Glasfasern aufweist.

Generell ist es möglich, ein Glasfaserkabel für den bidirektionalen Betrieb zu nutzen.

Über die wenigstens zwei elektrischen Leiter, die eine Spannungsversorgung für den elektromotorischen Antrieb bereitstellen, kann zugleich auch eine Spannungsversorgung für die elektronischen Komponenten der Signalsende- und Empfangstechnik an dem Fluggerät bereitgestellt werden. Von der Erfindung ist aber auch umfasst, wenn zur Erzielung der Spannungsversorgung für die Sende- und Empfangstechnik an dem Fluggerät weitere gesonderte elektrische Leiter als Bestandteil der Kabelanordnung mitgeführt werden.

Generell ist es aber das Bestreben der Erfindung, die Kabelanordnung möglichst leichtbauend auszubilden.

Gemäß einer vorteilhaften Ausgestaltung der Erfindung ist an dem Fluggerät eine Sende- und/oder Empfangseinheit für Funksignale angeordnet. Die Sende- und/oder Empfangseinheit für Funksignale kann eine oder mehrere Antennen umfassen. Sie kann darüber hinaus ein oder mehrere elektronische Bauelemente aufweisen, die die erforderliche Signalverarbeitung durchführen, um empfangene Funksignale dem elektrooptischen Wandler zuzuführen, mit dem Zweck, diese optisch auf das Glasfaserkabel einzukoppeln und oder die erforderlichen elektronischen Komponenten umfassen, um aus der Glasfaser heraus ausgekoppelte optische Signale in elektrische Signale zu wandeln und so zu verarbeiten, dass diese über eine Antenne gesendet werden können.

Grundsätzlich kann zur Bereitstellung einer Sende- und/oder Empfangseinheit an dem Fluggerät auf herkömmliche, elektronische Bauelemente zurückgegriffen werden.

Gemäß der Erfindung ist darüber hinaus vorgesehen, dass an dem Fluggerät eine Wandlereinheit angeordnet ist, die elektronische Signale in optische, auf das Glasfaserkabel aufkoppelbare Signale wandelt. Weiter und/oder alternativ ist vorgesehen, dass an dem Fluggerät eine Wandlereinheit vorgesehen ist, die optische, aus dem Glasfaserkabel auskoppelbare Signale in elektrische Signale wandelt. Auch hier kann die Erfindung auf herkömmliche elektronische Bauteile und Bauelemente für die Wandlereinheit zurückgreifen.

Gemäß einer weiteren vorteilhaften Ausgestaltung der Erfindung weist das Fluggerät einen Anschluss auf, über den das Glasfaserkabel lösbar anbringbar ist. Hier kann beispielsweise auf herkömmliche Schnittstellen zurückgegriffen werden. Es kann sich dabei beispielsweise um Steckanschlüsse handeln.

Gemäß einer weiteren vorteilhaften Ausgestaltung der Erfindung ist das Fluggerät über die Kabelanordnung mit der Bodenstation verbindbar. Hierdurch kann erreicht werden, dass das Fluggerät eine eingestellte Flugposition unter fortwährender Bereitstellung einer Spannungsversorgung über sehr lange Zeiträume bewahren kann.

Gemäß einer weiteren vorteilhaften Ausgestaltung der Erfindung ist das Fluggerät nach Art einer Drohne ausgebildet. Weiter vorteilhaft ist das Fluggerät nach Art eines Multicopters, z. B. nach Art eines Quadrocopters, oder alternativ als Helicopter ausgebildet. Dies ermöglicht einen Rückgriff auf herkömmliche Fluggeräte, die entsprechend der Erfindung modifiziert werden können, beispielsweise mit einer Sende-Empfangseinheit, mit einer Wandlereinheit, und/oder mit einem Anschluss für eine Kabelanordnung versehen werden können.

Die Erfindung betrifft des Weiteren ein Blitzschutzsystem nach Anspruch 10.

Der Erfindung liegt die Aufgabe zugrunde, ein Blitzschutzsystem zur Erzielung eines Blitzschutzes für ein Gelände bereitzustellen.

Die Erfindung löst diese Aufgabe mit den Merkmalen des Anspruches 10.

Zur Vermeidung von Wiederholungen kann bezüglich des Verständnisses der Lehre des Anspruches 10 und bezüglich der verwendeten Begrifflichkeiten und Merkmale und zu deren Auslegung auf die obigen Ausführungen verwiesen werden.

Gemäß einer vorteilhaften Ausgestaltung der Erfindung ist das erfindungsgemäße Blitzschutzsystem dadurch gekennzeichnet, dass das Blitzschutzsystem mehrere Fluggeräte aufweist, die jeweils unter einem vorgegebenen Abstand, insbesondere einem Maximalabstand (MAX, MAY) zueinander in ihrer jeweiligen Flugposition verharren.

Gemäß einer vorteilhaften Ausgestaltung der Erfindung ist das erfindungsgemäße Blitzschutzsystem dadurch gekennzeichnet, dass das Blitzschutzsystem mehrere Bodenstationen aufweist.

Gemäß einer vorteilhaften Ausgestaltung der Erfindung ist das erfindungsgemäße Blitzschutzsystem dadurch gekennzeichnet, dass jeweils eine Bodenstation mit einem Fluggerät verbunden ist.

Gemäß einer vorteilhaften Ausgestaltung der Erfindung ist das erfindungsgemäße Blitzschutzsystem dadurch gekennzeichnet, dass die Bodenstation mobil ausgebildet ist.

Gemäß einer vorteilhaften Ausgestaltung der Erfindung ist das erfindungsgemäße Blitzschutzsystem dadurch gekennzeichnet, dass das Blitzschutzsystem mobil ausgebildet ist.

Die Erfindung betrifft gemäß einem weiteren Aspekt ein Verfahren zur Bereitstellung eines Blitzschutzes für ein Gelände nach Anspruch 15.

Die Erfindung stellt sich die Aufgabe, ein solches Verfahren anzugeben.

Die Erfindung wird gelöst durch die Merkmale des Anspruches 15.

Wiederum wird zur Vermeidung von Wiederholungen auf die obigen Ausführungen verwiesen, die auch die Lehre der Erfindung nach Anspruch 20 erläutern.

Weitere Vorteile ergeben sich aus den nicht zitierten Unteransprüchen sowie anhand der nachfolgenden Beschreibung, der in den Figuren dargestellten Ausführungsbeispiele. Darin zeigen:
- Fig. 1: in einer teilgeschnittenen, schematischen Ansicht ein erstes Ausführungsbeispiel eines erfindungsgemäßen Fluggerätes und eines erfindungsgemäßen Blitzschutzsystems, mit einer schematisch dargestellten Bodenstation, die über eine abgebrochen dargestellte Kabelanordnung mit einem Fluggerät verbunden ist, welches oberhalb eines Veranstaltungsgeländes eine eingestellte Flugposition einnimmt,
- Fig. 2: ein erstes Ausführungsbeispiel einer Kabelanordnung zur Verbindung zwischen Fluggerät und Bodenstation in einem schematischen Querschnitt, etwa gemäß Schnittlinie II - II in Fig. 1, wobei die Kabelanordnung zwei Leiter aufweist,
- Fig. 3: ein weiteres Ausführungsbeispiel eines Querschnittes einer Kabelanordnung in einer Darstellung gemäß Fig. 2 mit sieben Leitern,
- Fig. 4: ein weiteres Ausführungsbeispiel eines erfindungsgemäßen Fluggerätes und eines erfindungsgemäßen Blitzschutzsystems in einer Darstellung gemäß Fig. 1, wobei das Fluggerät zusätzlich eine Kommunikationseinheit zur Bereitstellung eines Funknetzwerkes aufweist,
- Fig. 5a: ein Ausführungsbeispiel eines Querschnittes einer Kabelanordnung, umfassend auch ein Glasfaserkabel, etwa gemäß Schnittlinie V - V in Fig. 4,
- Fig. 5b: in einer Darstellung gemäß Fig. 5a ein weiteres Ausführungsbeispiel eines Querschnitts einer Kabelanordnung,
- Fig. 6: in einer teilgeschnittenen, schematischen blockschaltbildartigen Darstellung ein Ausführungsbeispiel eines Fluggerätes in einer vergrößerten Darstellung etwa gemäß Teilkreis VI in Fig. 1, wobei einige elektronische Komponenten des Fluggerätes dargestellt sind,
- Fig. 7: ein weiteres Ausführungsbeispiel eines Fluggerätes in einer Darstellung gemäß Fig. 6, wobei zusätzlich eine Kommunikationseinheit vorgesehen ist,
- Fig. 8: ein weiteres Ausführungsbeispiel eines erfindungsgemäßen Fluggerätes in einer Darstellung gemäß Fig. 6, wobei geänderte Blitzschutzeinrichtungen vorgesehen sind,
- Fig. 9: ein weiteres Ausführungsbeispiel eines Fluggerätes in einer Darstellung gemäß Fig. 6, wobei wiederum geänderte Blitzschutzeinrichtungen vorgesehen sind, und
- Fig. 10: eine schematische Draufsicht auf ein Veranstaltungsgelände, über dem eine Mehrzahl von Fluggeräten, bei dem Ausführungsbeispiel der Fig. 10 insgesamt sechs Fluggeräte, zu Blitzschutzzwecken angeordnet sind, die jeweils unter einem vorgegebenen Maximalabstand voneinander beabstandet sind und nach Art von Gitterpunkten angeordnet sind.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

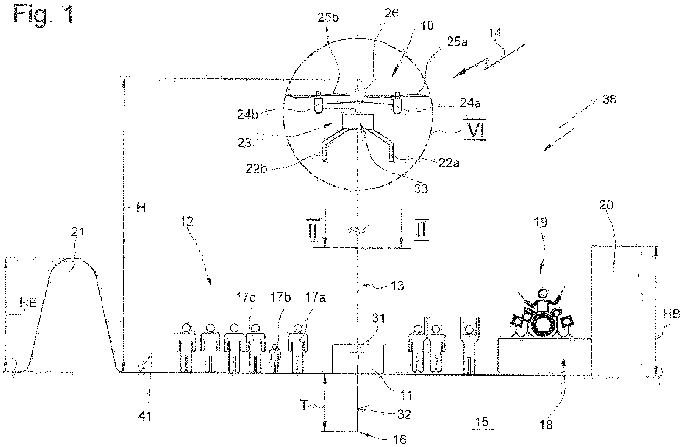

Das in seiner Gesamtheit mit 10 bezeichnete Fluggerät bildet einen wesentlichen Bestandteil eines in seiner Gesamtheit mit insgesamt 36 in den Figuren bezeichneten Blitzschutzsystems. Dieses soll nachfolgend, zunächst anhand eines Ausführungsbeispiels der Fig. 1 erläutert werden:
Fig. 1 zeigt das Fluggerät 10 unter einem abgebrochen, das heißt nicht maßstäblich dargestellten, Abstand H, der sogenannten Flughöhe, über einem Boden 41.

Das Fluggerät 10 ist mittels einer Kabelanordnung 13 mit einer Bodenstation 11 verbunden. Das Fluggerät 10 schwebt also oberhalb eines Geländes, insbesondere oberhalb eines in Fig. 1 dargestellten Veranstaltungsgeländes 12.

In den Figuren ist das Fluggerät schematisch nach Art einer Drohne dargestellt. Von der Erfindung ist aber insbesondere auch umfasst, wenn das Fluggerät 10 nach Art eines Helicopters oder als Helicopter ausgebildet ist.

Als Helicopter werden insbesondere Fluggeräte verstanden, die wenigstens einen Rotor aufweisen, der um eine im Wesentlichen vertikal ausgerichtete Drehachse dreht, so wie wenigstens einen weiteren Rotor aufweist, der um eine im Wesentlichen horizontal ausgerichtete Drehachse dreht. Bei derartigen Helicoptern kann beispielsweise auch eine Neigungseinstellung der Rotorblätter unter Zuhilfenahme einer Taumelscheibe erfolgen, wie dies bei herkömmlichen Helicoptern zur Einstellung des Pitches, also der Einstellung der Neigung oder des Anstellwinkels der Rotorblätter, bekannt ist.

Das Blitzschutzsystem 36 dient insgesamt dazu, die Besucher des Veranstaltungsgeländes 12, die in Fig. 1 als Menschen 17a, 17b, 17c schematisch dargestellt sind, aber auch die Mitarbeiter, wie Musiker 19, vor Einschlägen eines schematisch angedeuteten Blitzes 14 zu schützen. Unter Zuhilfenahme des Fluggerätes 10, der Kabelanordnung 13 und eines innerhalb eines Erdreiches 15 angeordneten Blitz-Übergabe-Punktes 16 wird der Blitz sicher in die Erde geleitet, sodass die Besucher und Teilnehmer der Veranstaltung nicht in Gefahr geraten.

Das Fluggerät 10 ist in einer Flughöhe H angeordnet, oberhalb des Veranstaltungsgeländes 12. Die Flughöhe H ist insbesondere größer als die Höhe HE von möglicherweise im Bereich des Veranstaltungsgeländes 12 angeordneter Erhebungen 21, und auch höher als die Höhe HB, möglicherweise in dem Veranstaltungsgelände 12 angeordneter Gebäude 20.

In dem von dem Blitzschutzsystem 36 zu schützenden Bereich oder Gelände 12 befindet sich insoweit das Fluggerät 10 in seiner Flugposition an einer erhabenen, insbesondere an der höchsten Stelle. Hierdurch wird gewährleistet, dass ein Blitz 14 zunächst in das Fluggerät 10 einschlägt, bevor es an einer anderen Position innerhalb des Veranstaltungsgeländes 12 auf den Boden 41 trifft.

Das Fluggerät 10 kann, wie in der schematischen Fig. 1 angedeutet ist, ein oder mehrere Füße 22 a, 22b aufweisen, um nach einem Einsatz wieder sicher auf dem Boden 41 landen zu können. Zwingend sind derartige Füße allerdings bei dem erfindungsgemäßen Fluggerät 10 nicht erforderlich.

Das Fluggerät 10 weist darüber hinaus ein Chassis 23 oder eine andere Art von Gestell oder Struktur auf. Das Chassis trägt insbesondere eine Steuerung 33 sowie weitere elektronische oder elektromechanische Komponenten des Fluggerätes.

Das Fluggerät weist bei dem Ausführungsbeispiel der Fig. 1 - lediglich beispielhaft angedeutet - zwei Rotoren 25a, 25b auf, denen jeweils ein gesonderter Antrieb 24a, 24b zugeordnet ist. Der Antrieb ist ein elektromotorischer Antrieb, sprich ein Elektromotor. Die Zahl der Rotoren ist beliebig. Hier kann auf herkömmliche Anordnungen oder Ausbildungen von Rotoren und deren Antriebe von sogenannten Multicoptern zurückgegriffen werden. Beispielsweise können 1 bis 16 Antriebe und/oder Motoren und Rotoren vorgesehen sein.

An dem Fluggerät 10 kann, wie bei dem Ausführungsbeispiel der Fig. 1 angedeutet, eine oder mehrere Blitzantennen 26 vorgesehen sein. Diese kann insbesondere ein metallisches Element oder einen metallischen Leiter umfassen, der in irgendeiner Form in einer exponierten Position endet, oder auf eine andere Art und Weise aus der Hüll-Kontur des Fluggerätes 10 herausragt, und/oder von einem Chassis 23 oder Gehäuse oder einem anderem Bestandteil des Fluggerätes gebildet oder mit gebildet sein kann.

Über die Kabelanordnung 13 werden die Elektronik oder Steuerung 33 des Fluggerätes 10 und insbesondere auch die elektromotorischen Antriebe 24a, 24b für die Rotoren 25a, 25b mit Betriebsspannung von der Bodenstation 11 versorgt.

Die Drohne 10 kann also eine einmal eingestellte Flugposition dauerhaft, zum Beispiel für mehrere Stunden oder Tage, bewahren und beibehalten. Die Bodenstation 11 wird hierzu beispielsweise an einen Stromgenerator oder an das herkömmliche Spannungsversorgungsnetz angeschlossen werden. Die Betriebsspannung wird von der Bodenstation 11 über die Kabelanordnung 13 an das Fluggerät 10 übermittelt.

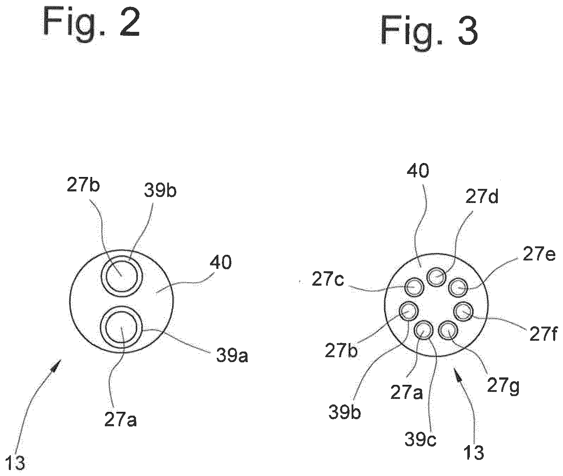

Anhand der Fig. 2 sollte ein erstes Ausführungsbeispiel einer Kabelanordnung 13 im Querschnitt dargestellt werden: Die Kabelanordnung 13 gemäß Fig. 2 weist nur zwei Leiter 27a, 27b auf. Diese bestehen aus einem metallischen Material, insbesondere aus Kupfer. Sie können von einer Isolierummantelung 39a, 39b umgeben sein. Die Kabelanordnung 13 kann darüber hinaus auch Stabilisierungsmaterial 40 umfassen, insbesondere ein solches, das ebenfalls aus Isoliermaterial besteht.

Vorteilhafterweise ist die Kabelanordnung 13 insgesamt möglichst leicht ausgebildet. Dieses Erfordernis ist leicht nachzuvollziehen, da die Gesamtlänge der Kabelanordnung 13 die maximale Nutz-/Traglast der Drohne 10 nicht überschreiten darf.

Von besonderer Bedeutung ist der Querschnitt der beiden Leiter 27a, 27b der Kabelanordnung 13 gemäß Fig. 2: Dieser Summenquerschnitt beträgt bei der Ausführungsform der Erfindung mindestens 10 mm². Der Summenquerschnitt kann sich auf die beiden Leiter 27a, 27b zu gleichen oder zu unterschiedlichen Teilen verteilen.

Bei dem Ausführungsbeispiel der Fig. 2 weist die Kabelanordnung 13 lediglich zwei elektrische Leiter 27a, 27b auf. Diese dienen im Normalfall - also dann, wenn keine Blitzeinschläge auftreten - der Übermittlung von Betriebsspannung von der Bodenstation 11 an das Fluggerät 10. Die beiden Leiter 27a, 27b können auch dazu dienen, Steuerinformationen von der Bodenstation an das Fluggerät 10 - oder auch in umgekehrter Richtung - zu übermitteln. Die Steuerinformationen können beispielsweise dazu dienen, die Flugposition der Drohne 10 einzustellen oder zu ändern oder zu überprüfen.

Bei einem weiteren Ausführungsbeispiel der Erfindung kann vorgesehen sein, dass die Übermittlung von Steuerinformationen zur Einstellung oder Änderung der Flugposition des Fluggerätes von der Bodenstation oder einer mobilen Steuerung oder einer anderen Steuerung am Boden an das Fluggerät 10 drahtlos über Funk erfolgt.

Bei dem Ausführungsbeispiel der Fig. 2 sind die beiden Leiter 27a, 27b mit einem derartig großen Querschnitt ausgestattet, bzw. mit einem ausreichend großen Summenquerschnitt von wenigstens 10 mm² ausgestattet, um die im Falle eines Blitzeinschlages verursachten enorm hohen Ströme von dem Fluggerät 10 über die Kabelanordnung 13 an die Bodenstation 11 und ins Erdreich 15 übermitteln zu können.

Im Bereich der Bodenstation 11 ist eine Verbindungsleitung 32 angeordnet, die entlang einer Tiefe T von vorzugsweise etwa 3 Metern oder mehr als 3 Metern ins Erdreich 15 bis zum einem Übergabepunkt 16 führt. Hier wird der Blitzschlag an das Erdreich übergeben. Der Blitz-Übergabe-Punkt 16 befindet sich insoweit auf Erdpotenzial oder Masse.

Im Falle eines Blitzeinschlages in die Drohne 10 gemäß Fig. 1 wird der Blitz also unmittelbar ins Erdreich 15 geleitet. Die Veranstaltung auf dem Veranstaltungsgelände 12 braucht nicht unterbrochen oder abgebrochen zu werden, da die Besucher 17a, 17b, 17c und die Künstler 19 nicht gefährdet sind.

Angemerkt sei, dass die Musikveranstaltung ausweislich der Fig. 1 nur ein Beispiel für mögliche Anwendungszwecke des erfindungsgemäßen Blitzschutzsystems 36 ist.

Ausweislich des Ausführungsbeispiels der Fig. 3 weist die Kabelanordnung 13 mehrere Leiter 27a, 27b, 27c, 27d, 27e, 27f, 27g auf. Diese sind jeweils mit einer Isolierummantelung 39b, 39c umgeben, wobei nur einige Isolierummantelungen in Fig. 3 mit Bezugszeichen versehen sind.

Die Anordnung der Leiter 27a, 27b, 27c, 27d, 27e, 27f, 27g bei dem Ausführungsbeispiel der Fig. 3 ist lediglich exemplarisch zu verstehen. Auch die einzelnen Querschnitte der Einzelleiter können gleich sein, wie bei Fig. 3 dargestellt, können aber auch gänzlich unterschiedlich sein.

Von Vorteil ist, wenn die Kabelanordnung 13 mehrere Leiter umfasst, und eine Vielzahl dieser Leiter, vorzugsweise sämtliche Leiter, an einer Weiterleitung der durch einen Blitzschlag verursachten Ströme teilnehmen. Dann kann nämlich der Summenquerschnitt der Leiter besonders klein gehalten werden. Im Falle einer Blitz-Weiterleitung treten besondere physikalische Effekte in elektrischen Leitungen auf. Diese führen dazu, dass, durch eine Verteilung der zur Blitz-Weiterleitung genutzten Leiter-Querschnitte auf möglichst viele Leiter, der Summenquerschnitt insgesamt geringer gehalten werden kann.

Vorteilhafterweise werden die an der Kabelanordnung 13 vorgesehenen Leiter nicht nur im Falle eines Blitzschlages zur Blitzableitung genutzt, sondern auch im normalen Flugbetrieb der Drohnen 10 genutzt. So kann über die Leiter 27a, 27b, 27c, 27d, 27e, 27f, 27g nicht nur eine Übermittlung von Betriebsspannung, sondern zum Beispiel auch eine Übermittlung von Informationen, unidirektional oder bidirektional, zwischen dem Fluggerät und der Bodenstation 11 durchgeführt werden.

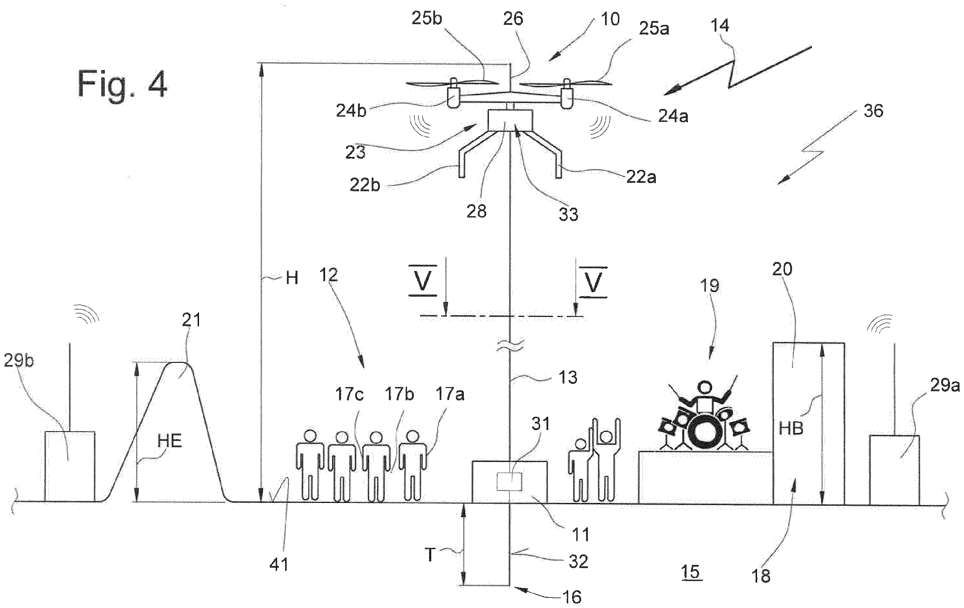

Ausweislich des Ausführungsbeispiels der Fig. 4 weist das Fluggerät 10 zusätzlich eine Kommunikationseinheit 28 auf. Diese Kommunikationseinheit kann mit Gegenstationen 29a, 29b, die zum Beispiel am Boden 41 angeordnet sind, ein Funknetzwerk ausbilden. Über dieses Funknetzwerk können Audiodaten oder Videosignale oder andere Informationen oder Daten übermittelt werden.

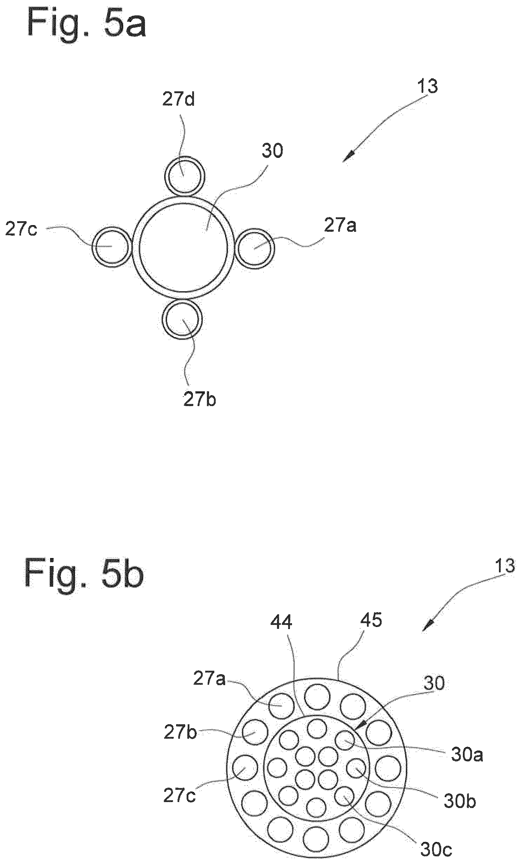

Die bei diesem Ausführungsbeispiel vorgesehene Kabelanordnung 13 ist im Querschnitt in Fig. 5a dargestellt. Hier wird deutlich, dass zusätzlich zu vier elektrischen Leitern 27a, 27b, 27c, 27d ein Glasfaserkabel 30 angeordnet ist. Der Zahl der elektrischen Leiter 27a, 27b, 27c, 27d wurde bei diesem Ausführungsbeispiel lediglich beispielhaft getroffen. Beispielsweise können die beiden Leiter 27a und 27b der Übermittlung von einer Betriebsspannung für die Antriebe der Drohne 10 dienen. Die beiden weiteren Leiter 27c und 27d können hingegen eine Übermittlung der Betriebsspannung für die Kommunikationseinheit 28 vorsehen.

Die Leiter können aber auch für andere unterschiedliche Anwendungszwecke eingesetzt werden und es können unterschiedliche Spannungen oder unterschiedliche Signale übermittelt werden.

Über das Glasfaserkabel 30 können optische Signale übermittelt werden, wobei sowohl im Bereich der Bodenstation 11 als auch im Bereich des Fluggerätes 10 elektrooptische oder optoelektrische Wandler vorhanden sein können. Einer Weiterleitung des im Falle eines Blitzschlages generierten hohen Stromes ist durch das Glasfaserkabel freilich nicht möglich. Hierfür sind die elektrischen Leiter 27a, 27b, 27c, 27d vorgesehen, deren Summenquerschnitt wiederum wenigstens 5 mm², vorzugsweise wenigstens 10 mm², ausmacht.

Über das Glasfaserkabel 30 können sowohl Funkdaten unidirektional oder bidirektional übermittelt werden, damit das Fluggerät 10 als Teilnehmer des Funknetzwerkes teilnehmen kann.

Über das Glasfaserkabel 30 können aber auch Informationen, Daten und Signale zwischen der Bodenstation 11 oder einer Steuerung 31 der Bodenstation 11 und dem Fluggerät 10 oder einer Steuerung 33a, 33b des Fluggerätes 10 übermittelt werden, z. B. um die Flugposition des Fluggerätes 10 zu steuern und/oder zu beeinflussen und/oder zu korrigieren.

Selbstverständlich ist die beispielhafte Darstellung eines Querschnittes der Kabelanordnung 13 gemäß Fig. 5a - wie auch schon gemäß den Figuren 2 und 3 - lediglich schematisch zu verstehen. Vorteilhafterweise weist die Kabelanordnung 13 einen insgesamt im Wesentlichen kreisförmigen oder an eine Kreisform angenäherten oder jedenfalls vorsprungsfreien Querschnitt auf, in den sämtliche elektrischen und optischen Leiter, soweit vorhanden, integriert sind.

Ausweislich des schematisch dargestellten Ausführungsbeispiels in der Fig. 5b besteht das Glasfaserkabel 30 aus zwölf einzelnen Glasfasersträngen 30a, 30b, 30c, wobei die übrigen Glasfaserstränge zwar dargestellt aber nicht bezeichnet sind. Auf die Zahl der Glasfaserstränge kommt es aber nicht an. Das Bündel der zwölf Glasfaserstränge 30a, 30b, 30c ist etwa entlang eines im Wesentlichen kreisförmigen Querschnitts arrangiert. Es kann des Weiteren optional eine Umhüllung 44 vorgesehen sein.

Um diese Umhüllung 44 herum sind zwölf elektrische Leiter 27a, 27b, 27c usw. angeordnet. Um diese zwölf Leiter herum ist eine weitere Umhüllung 45 vorgesehen, so dass der Querschnitt der Kabelanordnung gemäß Fig. 5b insgesamt einen im Wesentlichen kreisförmigen Querschnitt bildet. Die Umhüllung 45 kann, wie auch die Umhüllung 44, beispielsweise aus Kunststoff oder einem Textilmaterial bestehen. In Betracht kommt des Weiteren ein Material wie PVC oder Polyurethan.

Zur Vermeidung von Wiederholungen wird bezüglich der Ausführung eines Fluggerätes 10 unter Verwendung einer Kommunikationseinheit 28 zur Ausbildung eines Funknetzwerkes auf die nachveröffentlichte deutsche Patentanmeldung DE 10 2017 105 956.3 der Anmelderin verwiesen, deren Inhalt hiermit in den Inhalt der vorliegenden Patentanmeldung, auch zum Zwecke der Aufnahme einzelner Merkmale in die Ansprüche dieser Anmeldung, eingeschlossen wird.

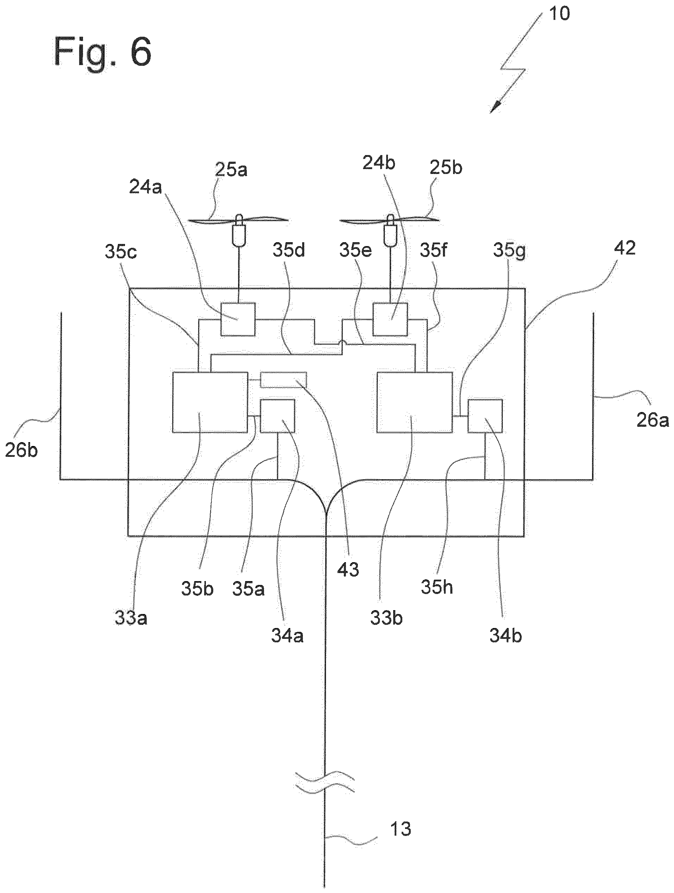

Ausweislich Fig. 6 soll nun der nach Art eines Blockschaltbildes dargestellte innere Aufbau eines Fluggerätes 10 erläutert werden:
Bei diesem Ausführungsbeispiel weist das Fluggerät 10 - beispielhaft dargestellt - zwei Blitz-Antennen 26a, 26b auf. Die Zahl der Blitz-Antennen 26 ist allerdings beliebig. Fig. 6 soll lediglich verdeutlichen, dass die Blitz-Antennen 26a, 26b aus einem Gehäuse 42 des Fluggerätes 10 oder aus einer Hüll-Kontur 42 des Fluggerätes 10 nach außen herausragen können.

Bei diesem Ausführungsbeispiel sind die Blitz-Antennen 26a, 26b unmittelbar mit der Kabelanordnung 13 verbunden. Da Fig. 6 eine Darstellung nach Art eines Blockschaltbildes ist, wird hier die detaillierte Verbindung nicht dargestellt.

Im einfachsten Fall, kann die Kabelanordnung 13 zwar zur Spannungsversorgung des Fluggerätes 10 dienen, und einen elektrischen Leiter zusätzlich aufweisen, der als gesonderter Leiter für die Blitz-Strom-Weiterleitung vorgesehen ist.

Tatsächlich ist in Fig. 6 dargestellt, dass die Blitz-Antennen 26a, 26b unmittelbar mit der Kabelanordnung 13 verbunden sind. Hierbei kann vorgesehen sein, dass bei einem Auftreten sehr hoher Spannungen oder sehr hoher Ströme beispielsweise eine - unter Umständen nur kurzzeitige - elektrische Verbindung zwischen mehreren Leitern 27a, 27b, 27c, 27d, 27e, 27f, 27g an der Kabelanordnung 13 hergestellt wird. Im Normalfall hingegen, das heißt in dem Fall, in dem kein Blitz einschlägt, können die einzelnen Leiter 27a, 27b, 27c, 27d, 27e, 27f, 27g voneinander elektrisch isoliert sein.

Bei dem Ausführungsbeispiel der Fig. 6 ist eine Steuerung 33a des Fluggerätes 10 vorgesehen, die über eine elektrische Leitung 35b, ein elektronisches Bauelement 34a und eine weitere elektrische Leitung 35a mit der Kabelanordnung 13 verbunden ist. Die Steuerung 33a ist über eine elektrische Leitung 35c mit dem motorischem Antrieb 24a für den Rotor 25a verbunden. Zugleich ist die Steuerung 33a über eine elektrische Leitung 35d mit dem elektromotorischem Antrieb 24b für den Rotor 25b verbunden.

Wie bereits bei den vorherigen Ausführungsbeispielen ist die Zahl der Rotoren 25a, 25b beliebig.

Die Steuerung 33a sorgt dafür oder sorgt mit dafür, dass eine eingestellte Flugposition des Fluggerätes 10 in einer Flughöhe H über dem Veranstaltungsgelände 12 bewahrt bleibt. Hierzu kann sie die Rotoren 25a, 25b mit der erforderlichen Versorgungsspannung für die Antriebe 24a, 24b versorgen und auch mit der erforderlichen Antriebsleistung. Gleichermaßen können in dem Fluggerät 10 beispielsweise auch ein oder mehrere Lagesensoren vorgesehen und mit der Steuerung 33a verbunden sein, um eine eingestellte Flugposition auch bei Auftreten von Wind und über lange Zeiträume von beispielsweise mehreren Tagen zu bewahren.

Im Normalfall erhält die Steuerung 33a über die Kabelanordnung 13 ihre Versorgungsspannung. Bei dem Ausführungsbeispiel der Fig. 6 ist vorgesehen, dass die Blitz-Antenne 26b ebenfalls mit der Kabelanordnung 13 verbunden ist. Um nun im Falle eines Blitzschlages zu verhindern, dass die Steuerung 33a ausfällt, ist eine Blitzschutzeinrichtung 34a vorgesehen. Die Blitzschutzeinrichtung 34a ist demnach zwischen der Kabelanordnung 13 und der Steuerung 33a vorgesehen.

Es kann sich bei der Blitzschutzeinrichtung 34a beispielsweise um einen Überspannungsschutz handeln. Im Falle des Auftretens hoher Spannungen - im Falle eines Blitzschlages - an der Eingangsseite der Blitzschutzeinrichtung 34a kann für eine dauerhafte oder kurzzeitige Unterbrechung der Verbindung der Steuereinheit 33a mit der Kabelanordnung 13 gesorgt werden, um die Steuerung 33a vor zu hohen Spannungen oder Strömen zu schützen.

Um eine kurzzeitige Überbrückung zu gewährleisten, kann die Steuerung 33a beispielsweise auch mit einer Batterie 43 verbunden sein, die kurzzeitige Ausfälle in der Spannungsversorgung überbrückt.

Alternativ kann die Steuerung 33a im Zusammenwirken mit der Blitzschutzeinrichtung 34a aber auch derartig konzipiert sein, dass unmittelbar nach einem kurzzeitigen Ausfall, zum Beispiel nach wenigen Sekundenbruchteilen, die Steuerung automatisch wieder eingreift.

Die Blitzschutzeinrichtung 34a sorgt jedenfalls dafür, dass die Steuerung 33a und alle an sie angeschlossenen elektronischen Bauelemente und Geräte, zum Beispiel auch die elektromotorischen Antriebe 24a, 24b, vor einer Überspannung geschützt werden.

Zusätzlich kann das Gehäuse 42 des Fluggerätes 10 auch nach Art eines Faradayschen Käfigs ausgebildet sein und dafür sorgen, dass in das Innenleben des Faradayschen Käfigs 42 selbst keine unerwünscht hohen Spannungen eindringen können.

Bei dem Ausführungsbeispiel der Fig. 6 ist darüber hinaus vorgesehen, dass die Steuerung 33a redundant vorhanden ist. Hierzu ist eine zweite Steuerung 33b mit einer zweiten Blitzschutzeinrichtung 34b und den entsprechenden Verbindungskabeln 35e, 35f, 35g, 35h vorgesehen.

Für den Fall, dass die Steuerung 33a aus irgendeinem Grunde ausfällt, beispielsweise weil die Blitzschutzeinrichtung 34a versagt hat, kann die Steuerung 33b die Kontrolle über das Fluggerät unmittelbar übernehmen. Hierzu kann beispielsweise auch während der Programmierung der Drohne 10, zum Beispiel während der Einstellung der Flugposition, eine Spiegelung sämtlicher relevanter Information an den beiden Steuerungen 33a und 33b permanent erfolgen.

Der guten Ordnung halber sei erwähnt, dass die Steuerung 33a, 33b beispielsweise Mikroprozessoren und auch Speicher, zum Beispiel flüchtige und nicht flüchtige Speicher, aufweisen können.

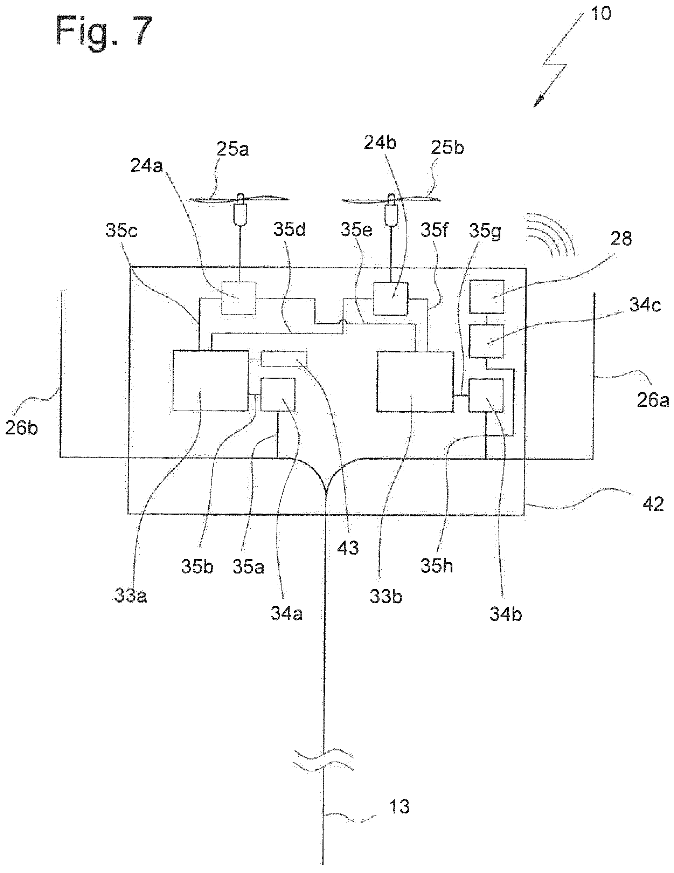

Bei dem Ausführungsbeispiel der Fig. 7 ist eine Anordnung getroffen, die im Wesentlichen der Drohne 10 der Fig. 6 entspricht. Hier ist zusätzlich eine Kommunikationseinheit 28 vorgesehen, wie diese bei dem Ausführungsbeispiel der Fig. 4 und Fig. 5a bereits erläutert worden ist.

Auch der Kommunikationseinheit 28 ist bei diesem Ausführungsbeispiel eine Blitzschutzeinrichtung 34c zugeordnet, die im Falle eines Blitzeinschlages dafür sorgt, dass die Kommunikationseinheit 28 weiter kommunikationsfähig bleibt. Auch die Kommunikationseinheit 28 kann - was Fig. 7 nicht darstellt - bei einem Ausführungsbeispiel der Erfindung redundant vorhanden sein, um so für eine höhere Ausfallsicherheit zu sorgen.

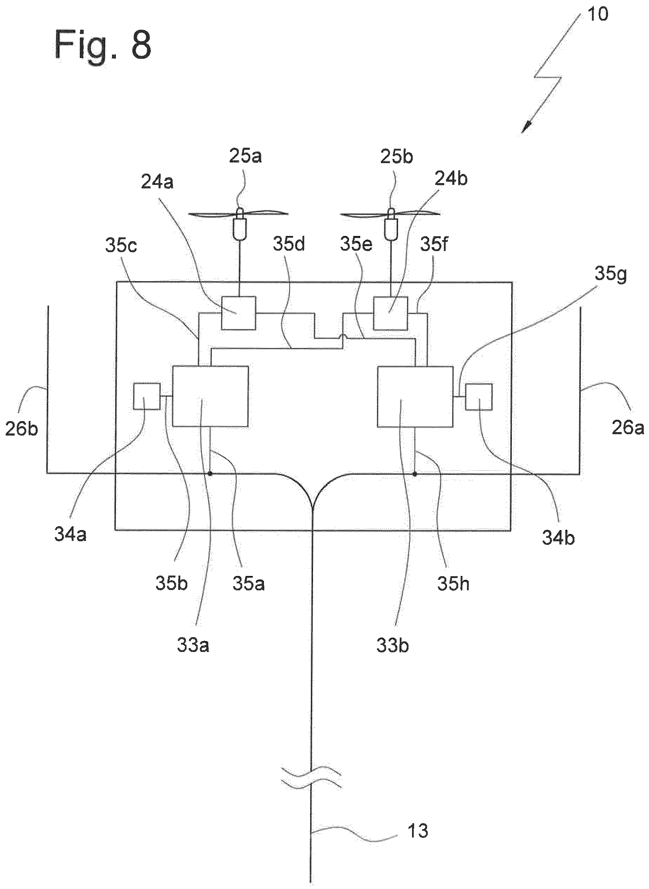

Bei dem Ausführungsbeispiel der Fig. 8 ist eine gegenüber dem Ausführungsbeispiel der Fig. 6 geänderte Anordnung getroffen. Hier ist die Blitzschutzeinrichtung 34a, 34b, unmittelbar mit der Steuerung 33a bzw. 33b verbunden, aber nicht unmittelbar mit der Kabelanordnung 13 verbunden.

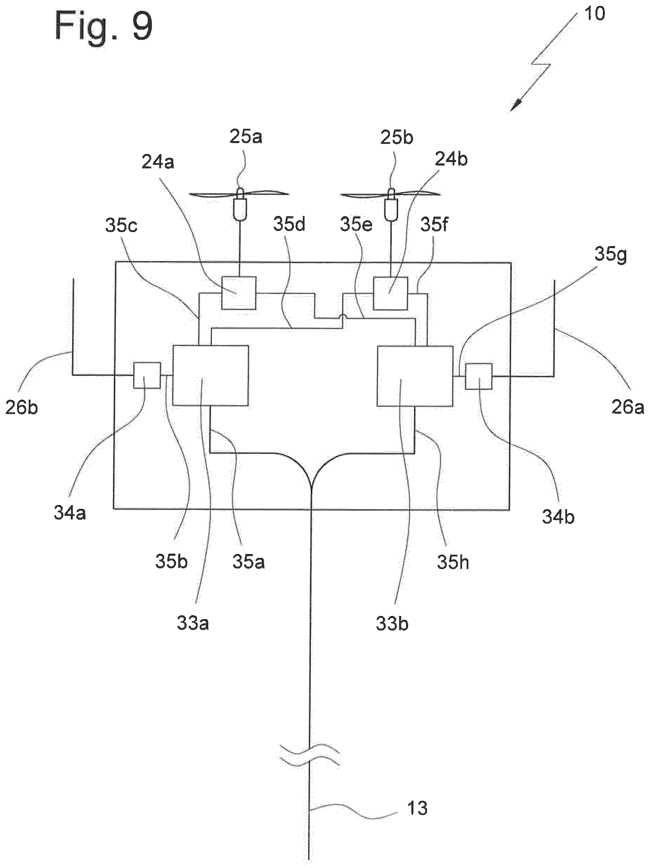

Bei dem Ausführungsbeispiel der Fig. 9 ist schließlich eine weitere alternative Ausgestaltung dargestellt: Hier ist wiederum eine Blitzschutzeinrichtung 34a, 34b vorgesehen, die mit der jeweiligen Steuerung 33a, 33b verbunden ist. Allerdings ist hier die entsprechende Blitz-Antenne 26a, 26b unmittelbar mit der jeweiligen Blitzschutzeinrichtung 34a, 34b verbunden.

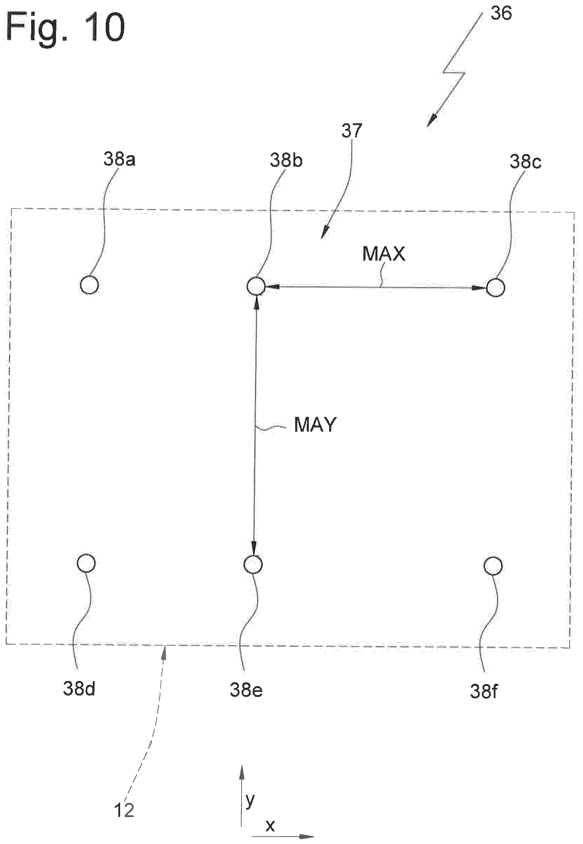

Das Ausführungsbeispiel der Fig. 10 zeigt ein Blitzschutzsystem, bei dem mehrere Fluggeräte 38a, 38b, 38c, 38d, 38e, 38f der erfindungsgemäßen Art im Einsatz sind. Dargestellt ist in Fig. 10 eine Ansicht auf ein Veranstaltungsgelände 12 von oben, wobei lediglich die Fluggeräte 38a, 38b, 38c, 38d, 38e, 38f dargestellt sind. Diese sind nach Art von Gitterpunkten oder nach Art eines Rasters bei regelmäßigen Abständen angeordnet. Die Maximalabstände werden als MAX bzw. MAY bezeichnet. Das Raster entfaltet sich entlang einer X - Y Ebene. Sämtliche Fluggeräte 38a, 38b, 38c, 38d, 38e, 38f können entlang der selben Flugghöhe H angeordnet sein oder entlang unterschiedlicher Höhen.

Es hat sich herausgestellt, das bei Einhaltung von Maximal-Abständen von 80 Metern (das heißt MAX = 80 Meter und MAY = 80 Meter) bereits für einen ausreichenden Schutz vor Blitzeinschlägen gesorgt werden kann. Es sind auch Maximal-Abstände von beispielsweise 40 Metern oder weniger zwischen jeweils zwei Drohnen von der Erfindung umfasst.

Auch die Bodenstation 11 kann, was in den Figuren nicht dargestellt ist, Blitzschutzeinrichtungen umfassen, um beispielsweise eine Steuerung 31 der Bodenstation 11 und/oder andere elektronische oder elektrische Elemente der Bodenstation 11 vor Beeinträchtigung oder Beschädigung durch Blitzeinschläge zu schützen.

## Patentansprüche

1. Fluggerät (10), umfassend wenigstens einen elektromotorischen Antrieb (24a, 24b) und eine Steuerung (33, 33a, 33b), wobei das Fluggerät unter Zuhilfenahme der Steuerung eine eingestellte Flugposition dauerhaft bewahren kann, wobei das in seiner Flugposition befindliche Fluggerät über eine Kabelanordnung (13) mit einer Bodenstation (11) verbunden ist, wobei die Kabelanordnung wenigstens zwei elektrische Leiter (27a, 27b, 27c, 27d, 27e, 27f, 27g) zur Bereitstellung einer Spannungsversorgung für den Antrieb umfasst, wobei das Fluggerät eine Blitzschutzeinrichtung (34a, 34b, 34c) aufweist, die die Steuerung und/oder den Antrieb und/oder andere elektronische Bauelemente des Fluggerätes vor Blitzeinschlägen schützt, wobei die Kabelanordnung einen Summenquerschnitt der elektrischen Leiter aufweist, der eine Weiterleitung von hohen, durch Blitzeinschläge verursachten elektrischen Strömen von dem Fluggerät (10) zur Bodenstation (11) ermöglicht, und wobei die Kabelanordnung im Bereich der Bodenstation mit einem Blitz-Übergabe-Punkt (16) im Erdreich (15) verbunden ist.

2. Fluggerät nach Anspruch 1, **dadurch gekennzeichnet, dass** der Blitz-Übergabe-Punkt eine Tiefe (T) im Erdreich von wenigstens 1m, insbesondere wenigstens 2m, weiter insbesondere wenigstens 3 m aufweist.

3. Fluggerät nach Anspruch 1 oder 2, **dadurch gekennzeichnet, dass** die Blitzschutzeinrichtung (34a, 34b, 34c) einen Überspannungsschutz und/oder eine redundante Ausbildung elektronischer Bauelemente des Fluggerätes, insbesondere eine redundante Ausbildung der Steuerung (33a, 33b), umfasst.

4. Fluggerät nach einem der vorgenannten Ansprüche, **dadurch gekennzeichnet, dass** die elektrischen Leiter (27a, 27b, 27c, 27d, 27e, 27f, 27g) der Kabelanordnung Kupferleiter umfassen.

5. Fluggerät nach einem der vorgenannten Ansprüche, **dadurch gekennzeichnet, dass** der Summenquerschnitt sämtlicher elektrischer Leiter der Kabelanordnung wenigstens 5mm², insbesondere wenigstens 8mm², weiter insbesondere wenigstens 10mm², weiter insbesondere wenigstens 12 mm² umfasst.

6. Fluggerät nach einem der vorgenannten Ansprüche, **dadurch gekennzeichnet, dass** die Flugposition des Fluggerätes einstellbar ist.

7. Fluggerät nach einem der vorgenannten Ansprüche, **dadurch gekennzeichnet, dass** die Kabelanordnung (13) mehrere Leiter (27a, 27b, 27c, 27d, 27e, 27f, 27g) aufweist, die sämtlich oder zumindest teilweise zur Blitzschlag-Weiterleitung beitragen.

8. Fluggerät nach einem der vorgenannten Ansprüche, **dadurch gekennzeichnet, dass** das Fluggerät eine Kommunikationseinheit (28) aufweist, mit der eine drahtlose Kommunikation zu anderen Teilnehmern (29a, 29b) eines Funknetzwerkes bewerkstelligbar ist.

9. Fluggerät nach Anspruch 8, **dadurch gekennzeichnet, dass** die Kabelanordnung (13) ein Glasfaserkabel (30) umfasst, über welches Daten von der Bodenstation (11) zur Kommunikationseinheit (28) übermittelbar sind und/oder über welches Daten von der Kommunikationseinheit (28) zur Bodenstation (11) übermittelbar sind

10. Blitzschutzsystem (36) zur Erzielung eines Blitzschutzes für ein Gelände (12), insbesondere für ein Veranstaltungsgelände, umfassend:
a) Wenigstens eine Bodenstation (11),
b) Wenigstens ein Fluggerät (10), insbesondere ein Fluggerät nach einem der vorangegangenen Ansprüche, wobei das Fluggerät wenigstens einen elektromotorischen Antrieb (24a, 24b) und eine Steuerung (33, 33a, 33b) aufweist, und nach Einstellung einer Flugposition diese dauerhaft halten kann,
c) wobei das Fluggerät (10) über eine Kabelanordnung (13) mit der Bodenstation (11) verbunden ist, wobei die Kabelanordnung wenigstens zwei elektrische Leiter (27a, 27b, 27c, 27d, 27e, 27f, 27g) zur Bereitstellung einer Spannungsversorgung für den Antrieb umfasst,
d) wobei die Kabelanordnung (13) zur Blitzweiterleitung ausgelegt ist, und
e) wobei die Kabelanordnung unmittelbar oder mittelbar mit dem Erdreich (15) verbunden ist.

11. Blitzschutzsystem nach Anspruch 10, **dadurch gekennzeichnet, dass** das Fluggerät (10) eine Blitzschutzeinrichtung (34a, 34b, 34c) aufweist.

12. Blitzschutzsystem nach Anspruch 11, **dadurch gekennzeichnet, dass** die Blitzschutzeinrichtung (34a, 34b, 34c) die Steuerung und/oder den Antrieb vor Blitzeinschlägen schützt.

13. Blitzschutzsystem nach einem der Ansprüche 10, 11 oder 12, **dadurch gekennzeichnet, dass** die Kabelanordnung (13) einen ausreichend hohen Summenquerschnitt der elektrischen Leiter aufweist, der eine Weiterleitung von hohen, durch Blitzeinschläge verursachten elektrischen Strömen von dem Fluggerät zur Bodenstation ermöglicht.

14. Blitzschutzsystem nach einem der Ansprüche 10 bis 13, **dadurch gekennzeichnet, dass** die Kabelanordnung (13), insbesondere im Bereich der Bodenstation (11), mit einem Blitz-Übergabe-Punkt (16) im Erdreich (15) verbunden ist.

15. Verfahren zur Bereitstellung eines Blitzschutzes für ein Gelände (12), insbesondere für ein Veranstaltungsgelände, umfassend die folgenden Schritte:
a) Bereitstellen einer Bodenstation (11), eines Fluggerätes (10), und einer Kabelanordnung (13), wobei die Kabelanordnung elektrische Leiter (27a, 27b, 27c, 27d, 27e, 27f, 27g) aufweist, mit einem ausreichend hohen Summenquerschnitt, der eine Weiterleitung hoher elektrische Ströme, die durch Blitzeinschlag verursacht sind, ermöglicht,
b) Verbinden des Fluggerätes (10) mit der Bodenstation (11) über die Kabelanordnung (13), wobei die Kabelanordnung elektrisch mit dem Erdreich (15) verbunden wird,
c) Einstellen einer Flugposition für das Fluggerät (10), und Bewahren der eingestellten Flugposition unter Zuhilfenahme einer Steuerung (33, 33a, 33b) in dem Fluggerät,
d) Versorgen des Fluggerätes mit Betriebsspannung durch die Bodenstation über die Kabelanordnung (13),
e) Bereitstellen eines Blitzschutzes für das Gelände, durch Weiterleiten des im Falle eines Blitzeinschlages in das Fluggerät (10) eingeschlagenen Blitzes (14) durch die Kabelanordnung (13) ins Erdreich (15).
